# EUROPEAN PATENT APPLICATION

(11) **EP 0 979 995 A1**
(43) Date of publication of application: **16.02.2000**
(21) Application number: 99660120.9
(22) Date of filing: 09.07.1999
(51) Int. Cl.: G01N 21/89, G06T 7/00

(54) **Method and system for monitoring a paper web, a paper pulp or a wire travelling in a paper machine**

(30) Priority: 12.08.1998 FI 981736; 01.03.1999 FI 990427
(71) Applicant: Hildeco OY Ltd., 40100 Jyväskylä (FI)
(72) Inventor: Valkonen, Mika, 44100 Äänekoski (FI); Toivonen, Juha, 40520 Jyväskylä (FI); Snellman, Jorma, 40900 Säynätsalo (FI)
(74) Representative: LEITZINGER OY

(57) **Abstract**

The invention relates to a method and a system for monitoring a paper web travelling in a paper machine. The monitored object is photographed with a video camera (1) and a digitized image is stored in a memory (2m, 3). The operator has tools (5) for defining and delimiting a subsequently analyzed region of interest within an image field. The analysis of a delimited section is performed, depending on an application: a) by comparing to an image recorded from an ideal condition; b) by monitoring a change between sequential images; or c) by comparing the number of shades of grey in the stored image to preset limit numbers. As the analysis can be focused on an image section defined and delimited by the operator, the selectivity and reliability of analysis can be improved while reducing the quantity of information to be processed.

## Description

The present invention relates to a method for monitoring a paper web travelling in a paper machine, said method comprising the steps of
- imaging a monitored object with a video camera, and
- storing an image in a digital form and analyzing the stored image.

The invention relates also to a system for monitoring a paper web travelling in a paper machine, said system comprising
- a video camera imaging a monitored object, and
- image processing equipment for storing and analyzing an image.

The present invention also relates to a method for monitoring paper pulp and/or a wire travelling in the twin wire section of a paper machine , the object to be monitored in said method being regions of the paper web and the wires closely associated with a wire-gap opening point.

The invention relates also to a system for implementing such a method.

Video cameras have been used earlier in monitoring systems for a paper web travelling in a paper machine, intended for providing critical data for finding out the reasons for a web break. This type of system is disclosed e.g. in the patent publication US-5,717,456. This prior known system is provided with separate detectors for finding a web break. The analysis of stored images is initiated in response to the detection of a web break. Thus, the analysis of stored images has nothing to do with the detection of a web break but, instead, it is about finding out the reasons for a detected break on the basis of stored images.

In addition to web break, the run of a paper web involves a plurality of other aspects, whose monitoring and data acquisition of occurring incidents would be of utmost importance in terms of controlling the functions of a paper machine and securing as troublefree an operation as possible.

A major problem in twin wire machines is contamination of the wires and impurities flying therebetween onto the paper web and stock deposits, which cause defects in paper pulp present on the wire. Subsequently, there may be a detectable break in the machine, caused by said impurities and pulp deposits.

In order to avoid this drawback, there has been no available method or system, capable of detecting the above problem at a sufficient reliability and speed, whereby it can possibly be addressed before it leads to a web break.

An object of the invention is to provide a method and a system, capable of reliable and real-time detection of information about incidents occurring in a paper web running in a paper machine.

This object is achieved by means of a method as set forth in claim 1 and a system as set forth in claim 2. The non-independent claims 3-12 disclose various practical applications for a method and system of the invention according to claims 1 and 2.

Another object of the invention is to provide a method and a system, whereby the development of the above problem in a twin wire machine can be detected at an early stage and whereby it is also possible to conduct analysis for discovering the source or nature of the problem.

This object is achieved by a method of the invention on the basis of the characterizing features set forth in the appended claim 13. As for a system of the invention, the above another object is achieved on the basis of the characterizing features set forth in claim 14.

The invention will now be described in more detail by way of exemplary embodiments with reference made to the accompanying drawings, in which
fig. 1 shows a monitoring system of the invention in a block diagram, provided with equipment for processing and analyzing a digitized image;
fig. 2 shows a monitoring system of the invention in a block diagram, provided with equipment according to a second embodiment of the invention for processing and analyzing an image;
fig. 3 shows a practical embodiment for monitoring the stripping of an edge trimming from a paper web on a pick-up roll;
fig. 4 shows a practical embodiment for monitoring an angle of dispart for a paper web from a roll surface;
fig. 5 shows a practical embodiment for monitoring the edge flutter of a paper web;
fig. 6 shows a practical embodiment for monitoring the operation of edge trimmers for a web;
fig. 7 shows a practical embodiment for monitoring malfunctions in edge cutters 21 delivering cutting jets;
fig. 8 shows a practical embodiment for monitoring stock/dirt accumulating on edge cutters 21 delivering cutting jets;
fig. 9 shows a coating station for a paper web in a front view;
fig. 10 shows a coating station and its backing roll in a rear-end view; and
fig. 11 shows camera pictures 25 as well as defined image sections 11 on a backing roll for a coating station.
fig. 12 shows in a lateral view a practical embodiment of the invention for monitoring a paper web downstream of a wire-gap opening point 12 typical in a twin wire, and closely associated wire regions;
fig. 13 shows a second practical application of the invention for monitoring wire regions closely associated with a wire-gap opening point 12 in a wire section provided with a top wire unit; and
fig. 14 shows in the imaging direction of cameras 1 a preferred arrangement for the cameras 1 and illuminators 18 and an example for the selection of ROI regions in cases of the above practical applications.

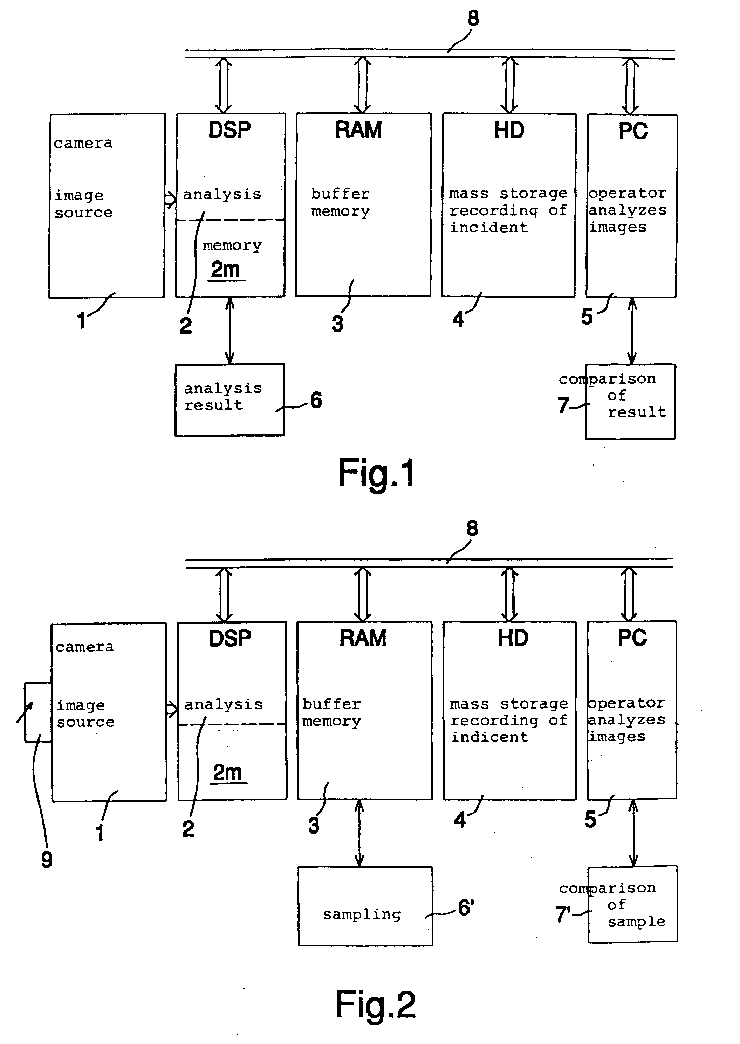

In the block diagram of fig. 1, the image source comprises a video camera 1 which produces a continuous video image of a monitored object. The image information is processed in a digital signal processor 2 or a DSP processor. Signal processors resemble ordinary microprocessors, but include e.g. the use of floating-point number technique and address forms for easier addressing. In addition, the DSP differs from an ordinary processor significantly in terms of its architecture, being designed for duties which involve lots of data and in which multiplying by integers and data transfers are statistically important operations. The DSP processors are capable of performing a wide variety of different and simultaneous calculation routines in relation to image analysis, the results of which can be applied automatically to the observation of changes appearing in image information.

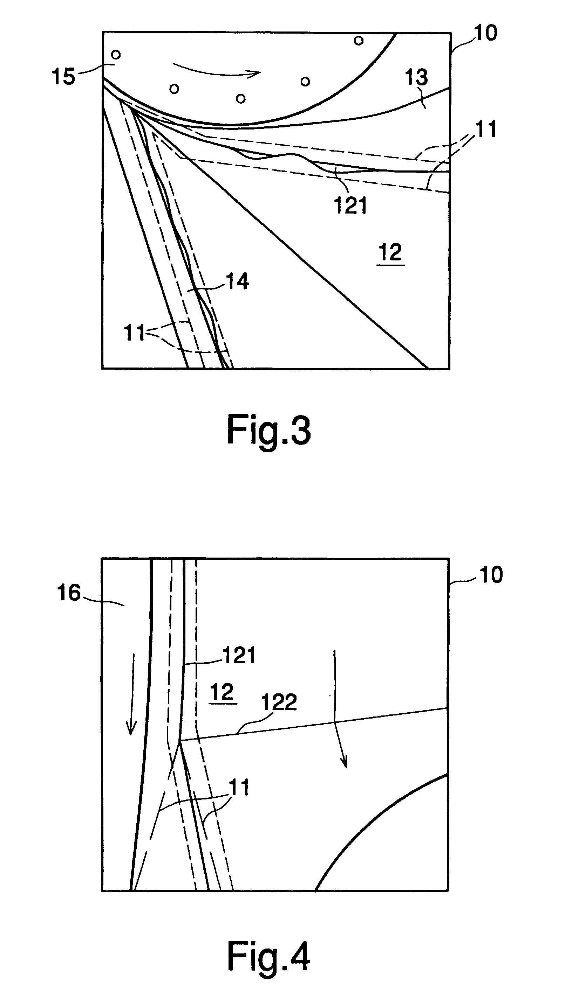

An essential part of the invention is constituted by tools provided for the operator, whereby the operator is capable of delimiting precisely an image area intended for analysis and, thus, the results of analysis can be provided with set limit values which set off a given action, e.g. an alarm for the operator. Delimiting an area at a monitored spot (a ROI region 11) in a video picture (10 in Figs 3-8 and 10, 1 and 14) is essential in terms of receiving correct results, since the selectivity and reliability of analysis improve as the amount of information to be processed diminishes. A further resulting benefit is that the operator will have tools for modifying the area as conditions change.

In the case of fig. 1, a target area is defined by setting points with the mouse of a PC 5 to create a closed polygon. In figs. 3-8, 11 and 14 the corresponding defined section 11 or ROI (Region of Interest) is designated with dashed lines. Only the image information remaining within the defined ROI section 11 is qualified for a calculation process. Furthermore, it is necessary to determine limit values, on the basis of which the software produces a response regarding the results of analysis, e.g. an alarm.

In the instance of fig. 1, the analysis is carried out in real time by comparing a result calculated by a DSP processor with determined limit values (online analysis). This online analysis is based on varying values in a video image calculated by a DSP processor. The variation is received as feedback from each recorded image. The variation may be based on the number of shades of grey in a single image or on a change between sequential images.

A significant application for the online analysis of fig. 1 is its operation as a break sensor for detecting a break in a paper web. The number of false alarms can be cut down by comparing analysis results received from a number of separate cameras, as well as by measuring the speed of detected image changes. A false alarm could be set off e.g. by the operator walking past the image field of a camera. However, such a slow change is mathematically discernible from a sudden change, such as the disappearance of a paper web from the picture.

The online analysis is effected with digitizing boards immediately after digitization by means of a DSP processor. After digitizing an image in an internal DSP memory 2m, the image analyses will be performed either by monitoring a change between sequential images over a delimited image section or by comparing the number of shades of grey within a delimited image section with preset limit values for the number of shades of grey. Thereafter, the PC 5 may request results of the above-mentioned analysis (the degree of change or number) and then perform another comparison with the set limit values. After this, the image proceeds to a RAM-memory 3 working as a buffer memory, which can be included in the same board as the DSP. If necessary, the images can be stored from the RAM-memory 3 into a mass storage 4 (hard disks HD), e.g. if an analysis result 6 warrants that a given incident be recorded for analysis by the operator (a result comparison 7 by means of the PC 5). Reference numeral 8 designates a data bus between the DSP-board and the PC, as well as between the memories.

The analysis shown in fig. 2 is effected by sampling image specimens 6' at set intervals (e.g. once a minute) and by comparing those with a reference image recorded from an ideal condition (offline analysis). This makes it possible to observe e.g. slow changes taking place in machine constructions. The offline analysis shown in fig. 2 differs from the online analysis of fig. 1 in the sense that the actual analysis is carried out by means of the processor of a PC 5. For an analysis, the PC 5 requests a sample of a video image which is stored in the buffer memory 3 (RAM) of a digitizing board. The requested sample is transferred from the buffer memory 3 to the mass storage 4 of the PC 5 and this image is compared by the PC (sample comparison 7) with a reference image, which is thus an image recorded from an ideal condition.

In the case of fig. 2, reference numeral 9 designates implements associated with a camera 1 for defining a delimited image section 11 from the camera. Such cameras are commercially available.

The calculation regarding changes that occur within the delimited area is based on general mathematical methods and calculation algorithms, whose elements are constituted by the shades of grey found in the images. These include e.g. various sums, histograms, matrices, variances, etc. In the invention, it is also possible to apply per se known image processing algorithms applicable to pattern recognition.

Figs. 3-8 depict examples of objects of analysis for applying a method and system of the invention for monitoring a paper web. The dashed line 11 is used in the images to define a region of interest ROI to be monitored.

In fig. 3, the monitoring is focused on an edge trimming cut from a web 12 and a web edge 15 on a pick-up roll 15. The monitoring results in the detection of anomalies regarding the stripping of the trimming 14 and the falling of the edge 121 off a pick-up felt 13. Here, like in other applications as well, a frame 10 is used to designate the entire image field which is sufficiently large for outlining the whole region being monitored, which also facilitates defining by operator's visual observations the image section 11 to be subjected to analysis. In all applications of implementation it is important that the operator can manually (e.g. by mouse) select and delimit the boundary of the image region 11 of interest based on simultaneous visual observations of a larger image field.

In fig. 4, the monitoring is focused on the edge 121 of the web 12 for observing the changes regarding an angle of dispart for the web (section 11') or a place of dispart 122 (section 11). The invention is applicable to monitoring the angle and/or place of dispart for a web in connection with several different types of rolls 16.

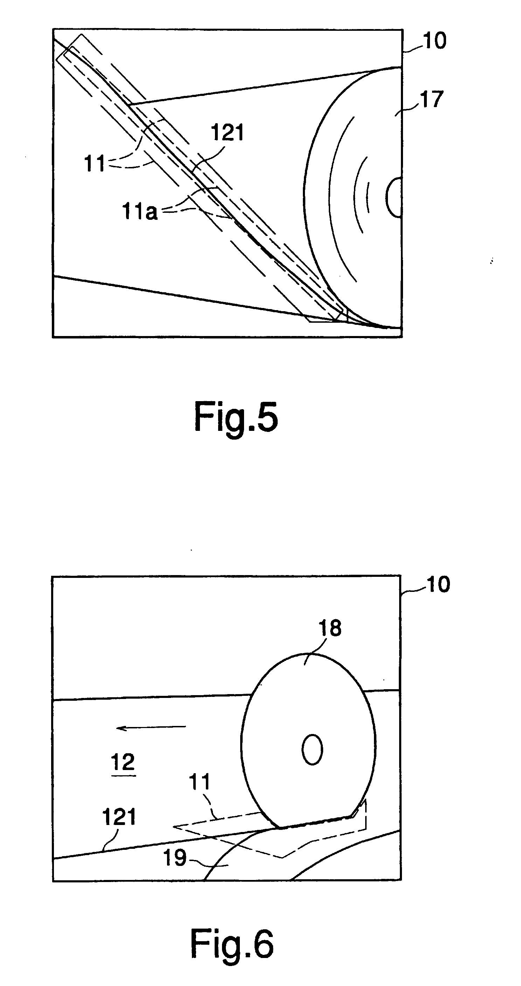

In fig. 5, the monitoring is focused on the edge 121 of the web 12 over long unsupported lengths for observing the overstepping of set extreme values 11 a. Thus, the extreme limits 11 a can be selected within the defined image section 11, the changes caused by a flutter of the edge 121 within the section 11 a being acceptable, but the substantial changes observed therebeyond within the section 11 causing an anomality detection.

In fig. 6, the monitoring is focused on a trimming 19 removed by an edge trimmer 18, as well as on the web edge 121. The monitoring results in observing changes in the trimming 19 regarding its dispart and in the edge 121 regarding its shape.

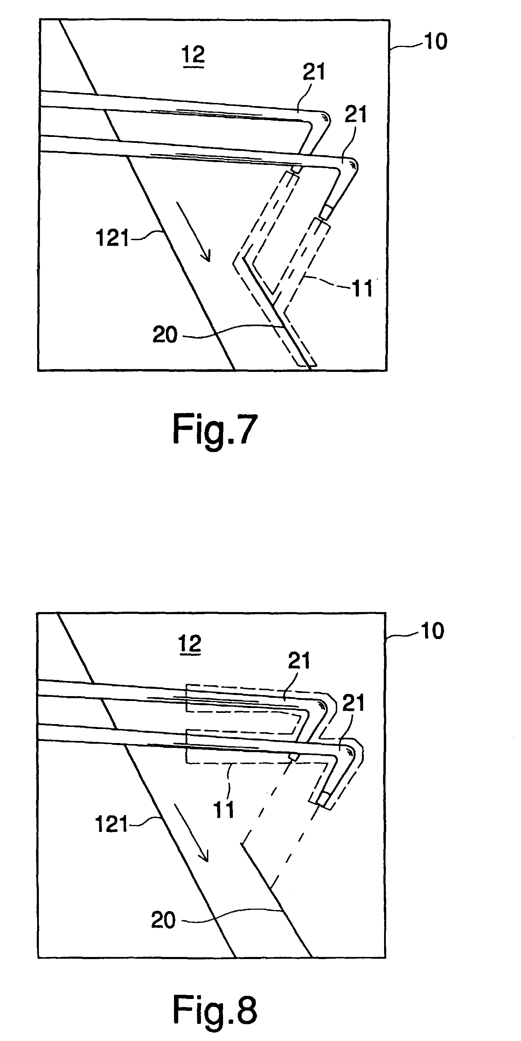

In fig. 7, the monitoring is focused on a water jet emerging from an edge cutter 21, and on a cutting trace 20 in the body of the web 12. The monitoring results in observing possible jet faults (air bubbles in water) and an incorrect cutting trace 20 (if the water jet has an incorrect pressure or angle).

In fig. 8, the monitoring is focused on stock or dirt accumulating on the structures of the edge cutters 21 for observing a possible slow change by comparing a delimited section within an image to a similarly delimited section within the original neat reference image.

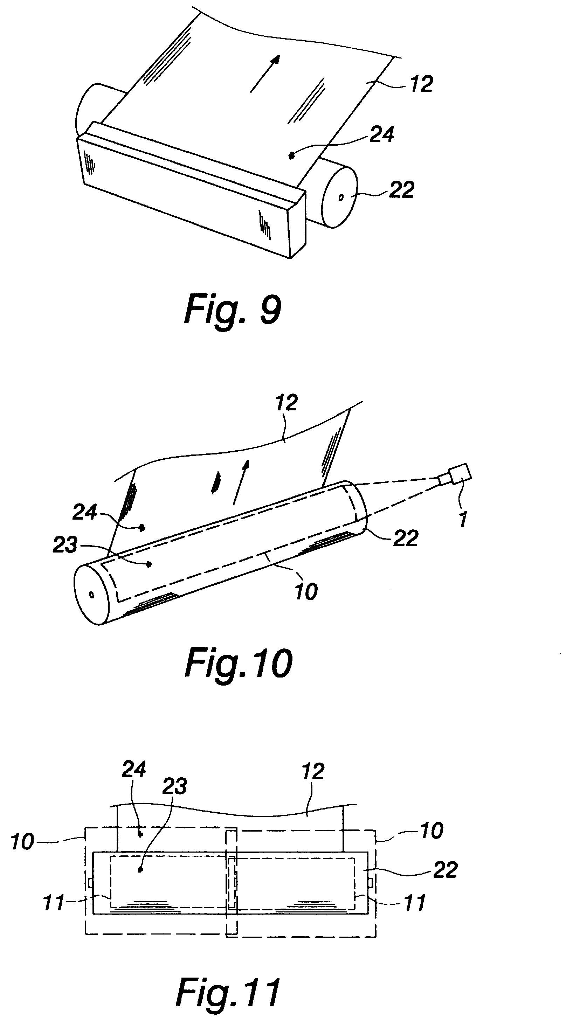

Figs. 9-10 illustrate analyzing an image at a coating station for a paper web. In the process of coating paper, the coating paste penetrating through holes 24 in a base paper 12 constitutes a problem in terms of both production and quality. When such a hole area 24 arrives at a coating station, the coating paste penetrates through the hole 24 in the base paper 12 and adheres to a backing roll 22. Consequently, a paste 23 present on the backing roll 22 may ruin a substantial quantity of paper to be coated, since it "stamps" in every rotation a stain of paste on the paper. In prior technology, a solution to this problem has been sought by means of examination systems present in the tail end of a machine, but the extremely slight differences in contrasts make such systems unreliable. A web monitoring system of the invention is capable of detecting the discussed problem ahead of the occurrence of a major harmful incident, by using the above-described web monitoring system involving the image analysis of a section 11 defined onto a region of interest.

One or a plurality of cameras 1 are set up behind the paper web 12 in such a way that the entire backing roll 22 is visible in the image of said cameras 1. The image field trimming implements are used for defining the subsequently analyzed image section 11 on the backing roll 22. The backing roll 22 being black, the pale stains of paste present therein are easy to find by means of an appropriate image analyzing algorithm and to set off an alarm about such stains to process personnel ahead of a harmful incident.

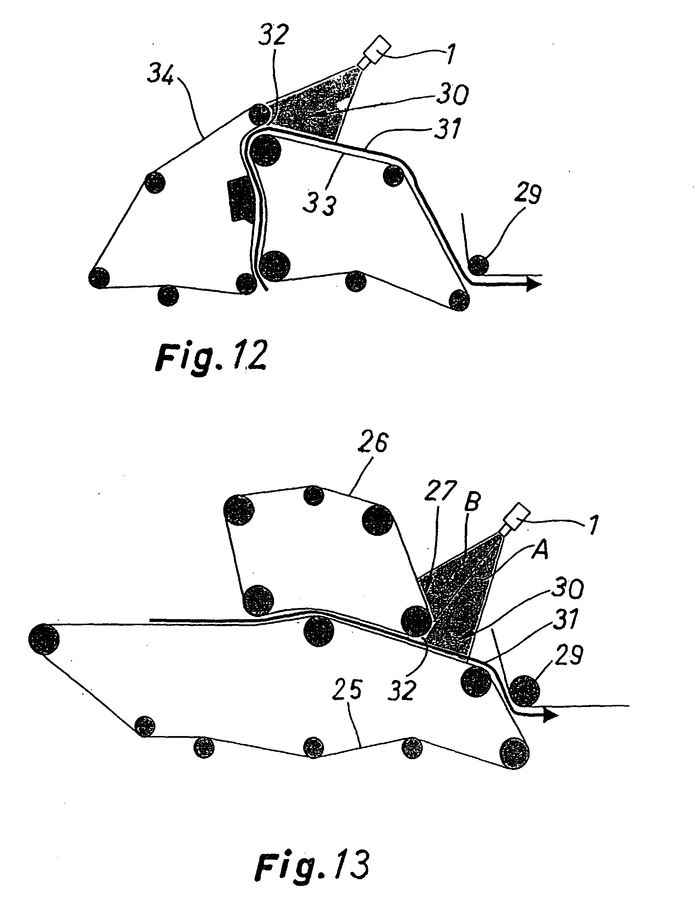

Reference is first made to the assemblies shown in figs. 12-14, which illustrate the image analysis of the invention on a twin wire machine..

Fig. 12 depicts a typical twin wire construction, comprising wires 33 and 34. Paper pulp 31 emerges from a wire-gap opening point 32 and follows the wire 33 to a pick-up roll 29, the edge strips cut off by water jets from edge cutters 27 being removed from the pulp web 31 thereat.

In the case of fig. 13, a wire section 25 is provided with a top wire unit 26 and a pulp web 31 travels from a wire-gap opening point 32 along the wire 25 to a pick-up roll 29.

In both cases, the interspace between the wires 33, 34 or 25, 26 is imaged by means of one or more cameras 1.

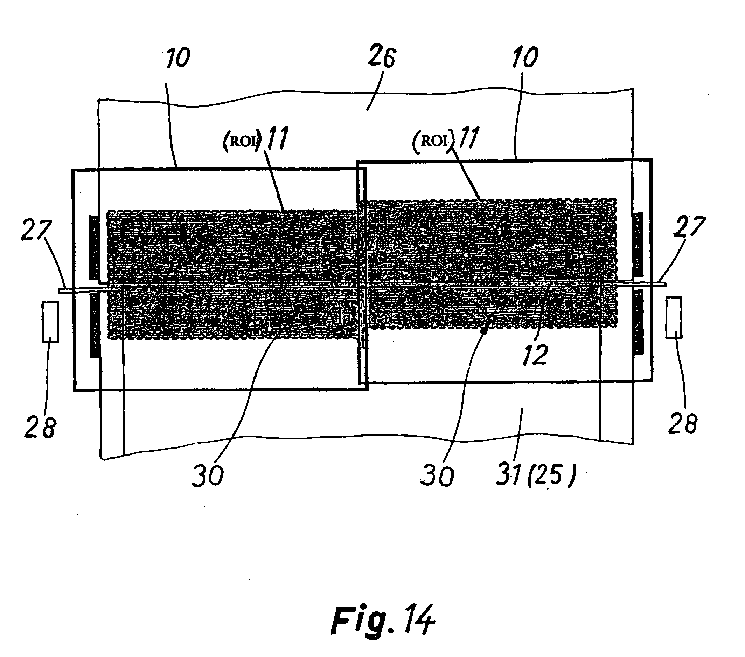

Fig. 14 illustrates two image fields 10 for two parallel cameras for imaging the entire web width at a sufficient accuracy. Illuminators 28 placed alongside the image fields 10 are used for lighting an image region at an appropriate angle for imaging at a sufficient accuracy the impurities and pulp deposits (local irregularities of pulp) emerging from the web gap, designated in figs. 12-14 with reference numeral 30. By using the image field delimiting function (as already described in more detail) the so-called ROI function (Region Of Interest), it is possible to select desired regions from the images of the cameras 1 for analysis. In fig. 14, the delimited ROI regions 11 are indicated by dashed lines. By means of this function it is possible to choose for observation e.g. impurities present in the top wire 26 (fig. 13, region B) or impurities and pulp deposits accumulating on a pulp web present on the bottom wire 25 (fig.13, region A). The delimitation of an image field and tools therefor can be used for separating desired information from an image, regarding impurities and contaminants or pulp deposits 30 carried along the wire or paper web or flying in the air. As described in more detail before in reference to figs. 1 and 2, the anomalies from a normal condition discovered in the images are recorded digitally on a hard disk 4 (figs. 1 and 2) for a subsequent analysis and, at the same time, an alarm can be set off for a process supervisor for possible further actions.

The above applications reveal that the method and system of the invention are applicable in a versatile manner to monitoring various running sections and processes of a paper web or a paper pulp. It can be used to replace prior known, often poorly functioning break sensors and, moreover, it can be used in monitoring duties, for which heretofore there have been no available monitoring or detecting instruments.

## Claims

1. A method for monitoring a paper web travelling in a paper machine, said method comprising the steps of
- imaging a monitored object with a video camera (1), and
- storing an image in a digital form and analyzing the stored image,
**characterized** by
- defining and delimiting within an image field (10) to be stored a region of interest (11), as selected;
- storing in a memory (2m, 3) a digitized picture of the image field (10) constituting a monitored object and containing said delimited image section (11); and
- analyzing the delimited image section (11) of the memory-stored digitized image (10) automatically by one or more of the following optional procedures:
a) comparing the delimited image section (11) of the stored image (10) with a similarly delimited image section of an image recorded from an ideal condition;
b) monitoring a change between the sequential images (10) regarding the delimited image section (11) only; or
c) comparing the number of shades of grey within the delimited image section (11) of the stored image (10) with preset limit numbers of shades of grey.

2. A system for monitoring a paper web travelling in a paper machine, said system comprising
- a video camera (1) photographing a monitored object, and
- image processing equipment (2-7) for storing and analyzing an image, **characterized** in that the image processing equipment comprises
- tools (5; 9) for defining and delimiting a monitored image section (11), as selected;
- a memory (2m, 3) for storing a digitized image containing an image section (11) delimited by said tools; and
- analyzing equipment (2; 5, 7) for analyzing the delimited image section (11) of a digitized image automatically by one or more of the following optional procedures:
a) comparing the delimited image section (11) of a stored image (10) with a similarly delimited image section of an image recorded from an ideal condition;
b) monitoring a change between sequential images regarding the delimited image section (11); or
c) comparing the number of shades of grey within the delimited image section (11) of the stored image (10) with preset limit numbers of shades of grey.

3. An application for a method as set forth in claim 1 or a system as set forth in claim 2, **characterized** in that said image analysis is used for observing breaks in a paper web.

4. An application as set forth in claim 3, **characterized** in that the number of false alarms is cut down by comparing analyzing results received from several different cameras.

5. An application as set forth in claim 2 or 3, **characterized** in that the number of false alarms is cut down by measuring the speed of image changes observed in said comparison or observation.

6. An application for a method as set forth in claim 1 or a system as set forth in claim 2, **characterized** in that said image analysis is used for monitoring a water jet emerging from an edge cutter (21) used for trimming an edge of the web (12) and a cutting trace (20) caused thereby in the body of the web (12).

7. An application for a method as set forth in claim 1 or a system as set forth in claim 2, **characterized** in that said image analysis is used for monitoring stock/dirt accumulating on the structures of an edge cutter (21) used for trimming the edge of the web (12).

8. An application for a method as set forth in claim 1 or a system as set forth in claim 2, **characterized** in that said image analysis is used for monitoring an edge trimming (14) cut off the web (12) and a web edge (121) on a pick-up roll (15), and for detecting anomalies regarding the dispart of the trimming (14) and falling of the edge (121) of the web (12) off a pick-up felt (13).

9. An application for a method as set forth in claim 1 or a system as set forth in claim 2, **characterized** in that said image analysis is used for monitoring the edge (121) of the web (12) disparting from a roll (16), and for detecting anomalies regarding an angle of dispart of the web (12) and/or a place of dispart (122).

10. An application for a method as set forth in claim 1 or a system as set forth in claim 2, **characterized** in that said image analysis is used for monitoring the edge (121) of the web (12) over long unsupported running lengths, and for detecting the overstepping of extreme edge lines (11a) set for the defined image section (11).

11. An application for a method as set forth in claim 1 or a system as set forth in claim 2, **characterized** in that said image analysis is used for monitoring a trimming (19) separated by an edge trimmer (18) and the edge (121) of the web (12), and for detecting anomalies in the trimming (19) regarding its dispart and in the edge (121) regarding its shape.

12. An application for a method as set forth in claim 1 or a system as set forth in claim 2, **characterized** in that said image analysis is used for monitoring the image section (11) defined on a backing roll (22) in a coating station for a paper web, and for detecting local changes appearing in the tint of the roll surface.

13. A method for monitoring paper pulp and/or a wire travelling in the twin wire section of a paper machine, the object to be monitored in said method comprising regions of the paper web and the wires closely associated with a wire-gap opening point (12), **characterized** in that
- the object to be monitored is analyzed and imaged with a video camera (1);
- within the image field to be monitored is defined and delimited a region of interest (11, ROI, A, B), as selected;
- a number of digitized images are stored in a memory (2m, 3) from the monitored image field, each of said stored images containing said delimited region of interest;
- the delimited image section (11, ROI, A, B) of a digitized image stored in the memory (2m, 3) is analyzed automatically with an image processing algorithm by utilizing one or more of the following optional procedures:
a) comparing the delimited image section (11, ROI, A, B) of the stored image with a similarly delimited image section of an image recorded from an ideal condition;
b) monitoring a change between sequential images regarding the delimited image section (11, ROI, A, B);
c) comparing the number of shades of grey within the delimited image section (11, ROI, A, B) of the stored image with preset limit numbers of shades of grey; or
d) applying image processing algorithms applicable to pattern recognition; and
- in a mass storage (4) for a subsequent analysis are recorded those digitized images in which the above analysis results in a discovery of a variation or change exceeding the preset limit.

14. A system for monitoring paper pulp web and/or a wire travelling in the twin wire section of a paper machine, **characterized** in that the system comprises
- a video camera (1) which is directed for imaging regions of the paper pulp web and the wires closely associated with a wire-gap opening point (32);
- image processing equipment (2-7) for storing and analyzing an image;
- tools (5; 9) for defining and delimiting a monitored image section, as selected;
- a memory (2m, 3) for storing digitized images each containing said delimited image section;
- analyzing equipment (2, 6; 2, 3, 6') for analyzing the delimited image sections (11, ROI, A, B) of the digitized images automatically by means of an image processing algorithm which utilizes one or more of the following optional procedures:
a) comparing the delimited image section (11, ROI, A, B) of a stored image with a similarly defined image section of an image recorded from an ideal condition;
b) monitoring a change between sequential images regarding the delimited image section (11, ROI, A, B);
c) comparing the number of shades of grey within the delimited image section (11, ROI, A, B) of the stored image with preset limit numbers of shades of grey; or
d) applying image processing algorithms applicable to pattem recognition; and
- a mass storage (4) for automatically recording for a subsequent analysis those digitized images, in which the above analysis results in a discovery of a variation or change exceeding a preset limit.
